(19)

Europäisches
Patentamt
European
Patent Office
Office européen
des brevets

(11)  **EP 2 628 632 A1**

(12)  **EUROPEAN PATENT APPLICATION**

(43) Date of publication:
**21.08.2013  Bulletin 2013/34**

(51) Int Cl.:
**B60N 2/015** *(2006.01)*

(21) Application number: **13155382.8**

(22) Date of filing: **15.02.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **15.02.2012  JP 2012030749**

(71) Applicant: **AISIN SEIKI KABUSHIKI KAISHA
Kariya-shi, Aichi-ken 448-8650 (JP)**

(72) Inventors:
• **Yamada, Yukifumi
KARIYA-SHI, AICHI-KEN, 448-8650 (JP)**

• **Hayashi, Takafumi
KARIYA-SHI, AICHI-KEN, 448-8650 (JP)**
• **Sakaguchi, Wataru
KARIYA-SHI, AICHI-KEN, 448-8650 (JP)**
• **Goto, Naoki
KARIYA-SHI, AICHI-KEN, 448-0027 (JP)**

(74) Representative: **Intès, Didier Gérard André et al
Cabinet Beau de Loménie
158, rue de l'Université
75340 Paris Cedex 07 (FR)**

(54)  **Vehicle seat sliding apparatus**

(57)      Provided is a vehicle seat sliding apparatus including a first formed of a metallic plate and a second rail in which the first rail is formed with a bearing surface configured to support a head portion of a tightening member shifted with respect to a bottom wall portion of the first rail in the direction of upright extension of the first rail at a distal end thereof, and a connecting portion configured to connect the bearing surface and the bottom wall portion on the non-end portion side of the first rail with respect to the bearing surface is formed to have a straight line group extending radially so as to intersect at a point positioned on the non-end portion side of the first rail with respect to the bearing surface.

FIG.5

L1-L3: RIDGE LINE (STRAIGHT LINE)
3: LOWER RAIL (FIRST RAIL)
12: FIRST COUPLING WALL PORTION
(BOTTOM WALL PORTION)
71: BEARING SURFACE
72: CONNECTING PORTION
76: TIGHTENING BOLT (TIGHTENING MEMBER)
76a: HEAD PORTION

EP 2 628 632 A1

## Description

TECHNICAL FIELD

This disclosure relates to a vehicle seat sliding apparatus.

BACKGROUND DISCUSSION

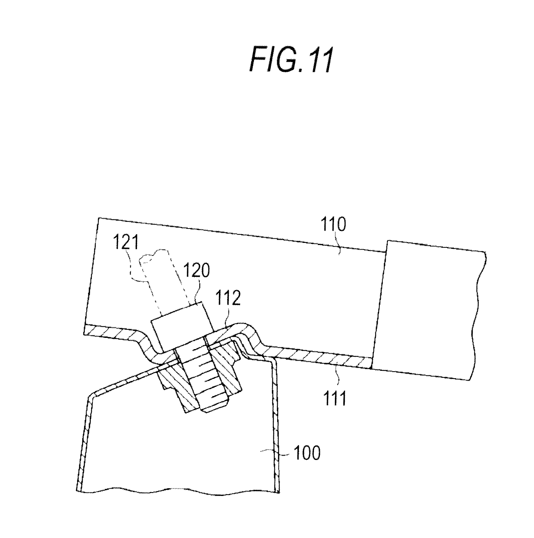

In the related art, various types of vehicle seat sliding apparatuses are known. For example, in the vehicle seat sliding apparatus disclosed in JP 7-35136B (Reference 1), inclining a bearing surface 112 for mounting a screw 120 with respect to a bottom wall 111 of a lower rail 110 by, for example, squeeze forming in order to tighten an end of the bottom wall 111 of the lower rail 110 to a bracket 100 which is to be fixed to a vehicle floor smoothly by the screw 120 as illustrated in Fig. 11 is proposed. In this case, the direction of tightening of the screw 120 may be inclined with respect to the direction orthogonal to the bottom wall 111. Accordingly, a screw driver apparatus 121 for tightening the screw 120 may be used from the front or the rear of a seat, so that a smooth assembly work is realized.

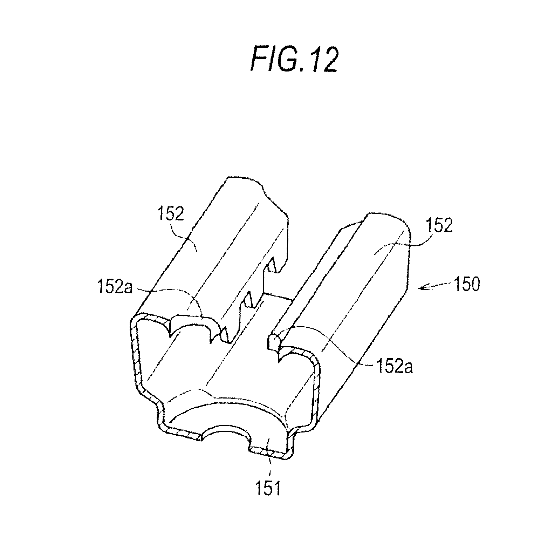

In contrast, in Japanese Patent No.4791553 (Reference 2), formation of a substantially circular shaped bearing surface 151 for mounting screws by, for example, squeeze formation at given positions of a lower rail 150 fixed to the vehicle floor side as illustrated in Fig. 12 is proposed. Then, a pair of flange portions 152 folded downward from both ends of the lower rail 150 in the width direction are formed with incisions 152a for allowing head portions of screws to be mounted on the bearing surface 151 to be passed therethrough.

Incidentally, in References 1 and 2, the cross-sectional shapes which are constant in the longitudinal direction of the lower rails 110 and 150 are formed by bending through press forming, for example. In other words, a process of bending forming and a process of squeeze forming are required for manufacturing the lower rails 110 and 150. In such a case, when the bearing surfaces 112 and 151 are formed after the formation of the cross-sectional shapes of the lower rails 110 and 150 (after the process of bending formation), there arises distortion in sizes of the cross-sectional shapes of the lower 110 and 150 formed by the previous processes so that performances of a sliding movement when being combined with upper rails may be deteriorated.

In contrast, when forming the cross-sectional shapes of the lower rails 110 and 150 after the formation of the bearing surfaces 112 and 151 (after the process of squeeze forming), it is difficult to determine the outline of the material of the lower rails 110 and 150 strictly considering the amount corresponding to the squeeze forming, and hence the formation of the cross-sectional shapes of the lower rails 110 and 150 with high degree of accuracy becomes difficult.

Normally, in squeeze forming, the amount of deformation which can be achieved at once is limited, and hence lowering of design flexibility of the bearing surface is inevitable unless otherwise increasing the number of steps of manufacture.

A need thus exists for a vehicle seat sliding apparatus capable of forming a cross-sectional shape of a rail with high degree of accuracy so as to be constant in the longitudinal direction without lowering design flexibility of a bearing surface,

SUMMARY

In order to solve the above-described problem, according to a first aspect of the embodiment disclosed here, there is provided a vehicle seat sliding apparatus including a first rail formed of a metallic plate to be fixed to either one of a vehicle floor or a seat and a second rail fixed to the other one of the vehicle floor and the seat and coupled to the first rail so as to be capable of performing a relative movement, wherein the first rail is formed with a bearing surface configured to support a head portion of a tightening member shifted with respect to a bottom wall portion of the first rail in the direction of upright extension of the first rail on an distal end thereof, a connecting portion configured to connect the bearing surface and the bottom wall portion on the non-end portion side of the first rail with respect to the bearing surface is formed to have a straight line group extending radially so as to intersect at a point positioned on the non-end portion side of the first rail with respect to the bearing surface.

With the configuration described above, the straight line group of the connecting portion (a plurality of ridge lines if it is a connecting portion formed by bending, and an infinite number of bus lines if it is a connecting portion formed by being curved) extends radially so as to intersect at a point positioned on the non-end portion side of the first rail with respect to the bearing surface. Therefore, even though the bearing surface is shifted with respect to the bottom wall portion in the direction of the upright extension, so called bending forming which causes deformation at a constant ratio in the vicinity of the respective straight lines is dominant as the forming of the connecting portion. Therefore, for example, deformation of a material of the first rail in a wide range and indeterminately is restrained in comparison with the case where general squeeze forming is performed and the cross-sectional shape of the first rail may be formed to be constant in the longitudinal direction except for the distal end with higher degree of accuracy. Also, design flexibility of the bearing surface is improved irrespective of a shift length in the direction of upright extension of the bearing surface with respect to the bottom wall portion, the deformation of the material of the first rail in the wide range and indeterminately is restrained.

In the vehicle seat sliding apparatus according to a second aspect of the embodiment disclosed here, at the time of a relative movement between the first rail and the second rail, a portion of the first rail on which the second rail is slidable is set to remain on the non-end portion side of the rail with respect to the connecting portion.

In the configuration described above, at the time of the relative movement between the first rail and the second rail, since the second rail does not slide on the connecting portion, impairment of an action of the relative movement (sliding movement) by the connecting portion may be avoided.

In the vehicle seat sliding apparatus according to a third aspect of the embodiment disclosed here, the straight line group forms a triangle surface with adjacent straight lines.

In this configuration, since the connecting portion has the triangle surface, peripheral components may be mounted by using a plane formed by the triangle surface or a square surface including part of the triangle surface, so that convenience is improved.

In the vehicle seat sliding apparatus according to a fourth aspect of the embodiment disclosed here, at the time of the relative movement between the first rail and the second rail, the portion of the first rail on which the second rail is slidable is set to remain on the outside of the connecting portion in the width direction.

In the configuration described above, at the time of the relative movement between the first rail and the second rail, since the second rail does not slide on the connecting portion, impairment of the action of the relative movement (sliding movement) by the connecting portion may be avoided. Also, the portion of the first rail on which the second rail is slidable may be overlapped with the range of the connecting portion in the longitudinal direction (in the direction of the relative movement), the constraint of the range of the relative movement of the first rail and the second rail by the connecting portion is prevented.

In the vehicle seat sliding apparatus according to a fifth aspect of the embodiment disclosed here, a length obtained by subtracting the distance between the edges of the connecting portion in the width direction (hereafter distance in the width direction) from the curve length of a cross-sectional shape of the connecting portion in the width direction (that is the sum of the lengths of the walls of the connecting portion, from one edge thereof to its other edge, hereafter curve length of the connecting portion in the width direction) is set to be equal to a projection length in the width direction when the connecting portion is deployed.

In the configuration described above, after the formation of the connecting portion or the like on the material of the first rail, the projection of the material in the width direction is eliminated. Therefore, by bending the material having an appearance of a band shape after forming the connecting portion or the like, the cross-sectional shape of the first lower rail can be formed easily and correctly.

In the vehicle seat sliding apparatus according to a sixth aspect of the embodiment disclosed here, the connecting portion forms a curved surface projecting in the direction of upright extension on the side where the bearing surface is shifted with respect to the bottom wall portion.

In the configuration described above, since the connecting portion is the curved surface, for example, a steep bending formation (bending formation) becomes unnecessary any longer and hence workability is improved correspondingly.

According to this disclosure, a vehicle seat sliding apparatus capable of forming a cross-sectional shape of a rail with high degree of accuracy so as to be constant in the longitudinal direction without lowering design flexibility of a bearing surface is provided.

BRIEF DESCRIPTION OF THE DRAWINGS

The foregoing and additional features and characteristics of this disclosure will become more apparent from the following detailed description considered with the reference to the accompanying drawings, wherein:

Fig. 1 is a side view illustrating a vehicle seat to which the embodiments disclosed here are applied;
Fig. 2 is a lateral cross section illustrating a first embodiment disclosed here;
Fig. 3 is an exploded perspective view illustrating the first embodiment;
Fig. 4 is a cross-sectional view taken along the line IV-IV in Fig. 2;
Fig. 5 is a perspective view of the first embodiment;
Fig. 6 is a lateral cross-sectional view of the first embodiment;
Fig. 7A is a plan view illustrating a material of a lower rail;
Fig. 7B is a plan view illustrating the lower rail after formation of the material of the lower rail;
Fig. 7C is a perspective view illustrating the lower rail after formation of the material of the lower rail;
Fig. 7D is a cross-sectional view taken along the line VIID-VIID in Fig. 7B;
Fig. 8 is a perspective view illustrating a second embodiment disclosed here;
Fig. 9 is a lateral cross-sectional view illustrating the second embodiment;
Fig. 10A is a plan view illustrating a material of a lower rail;
Fig. 10B is a plan view illustrating the lower rail after formation of the material of the lower rail;
Fig. 10C is a perspective view illustrating the lower rail after formation of the material of the lower rail;
Fig. 10D is a cross-sectional view taken along the line XDa-XDa, the line XDb-XDb, and the line XDc-XDc in Fig. 10B;
Fig. 11 is a vertical cross-sectional view illustrating the related art, and
Fig. 12 is a perspective view illustrating another related art in an exploded manner.

DETAILED DESCRIPTION

(First Embodiment)

The embodiments disclosed here will be explained with reference to the attached drawings.

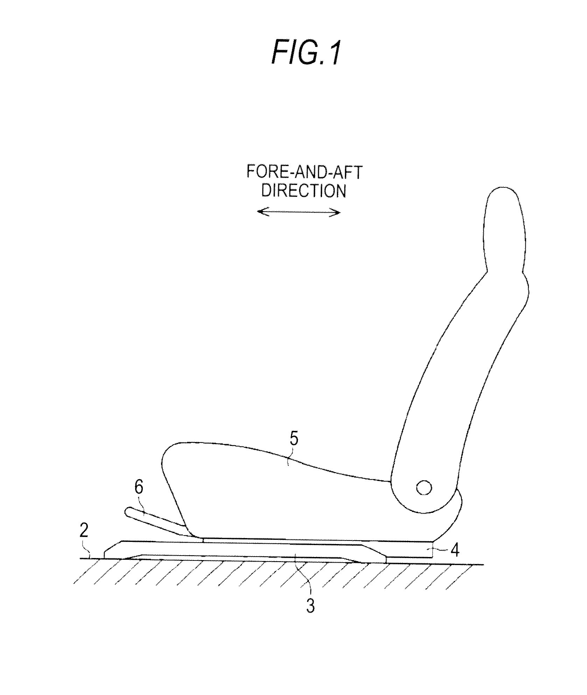

Referring to Fig. 1 to Fig. 7, a first embodiment disclosed here will be described. As illustrated in Fig. 1, lower rails 3 as first rails are fixed to a vehicle floor 2 in a state of extending in the fore-and-aft direction, and upper rails 4 as second rails are mounted onto the lower rails 3 so as to be movable in the fore-and-aft direction relatively to the lower rails 3.

The lower rails 3 and the upper rails 4 are disposed in pairs in the width direction (the direction orthogonal to the paper plane of Fig. 1), and those arranged on the left side when viewed toward the front are illustrated. Then, a seat 5 which forms a seating portion for an occupant is fixed to and supported by the both upper rails 4. The relative movement between the lower rails 3 and the upper rails 4 is basically in a locked state, and a releasing handle 6 for releasing the locked state is provided.

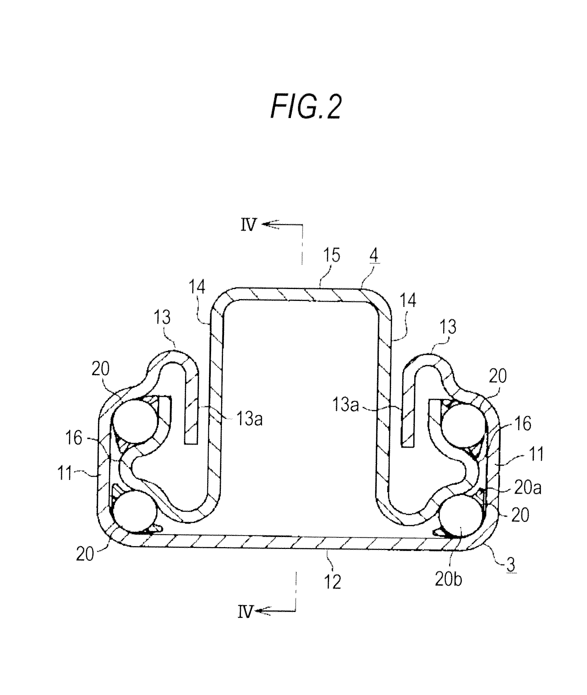

As illustrated in Fig. 2, the lower rail 3 is formed of a metal plate, and includes a pair of first side wall portions 11 extending in the vertical direction on both sides in the width direction and a first coupling wall portion 12 as a bottom wall portion coupling between proximal ends (lower ends) of the first side wall portions 11. Then, first folded-back wall portions 13 which are formed to protrude inward in terms of the widthwise direction and then folded backward toward the proximal end sides of the first side wall portions 11 are formed continuously from distal ends (upper ends) of the respective first side wall portions 11.

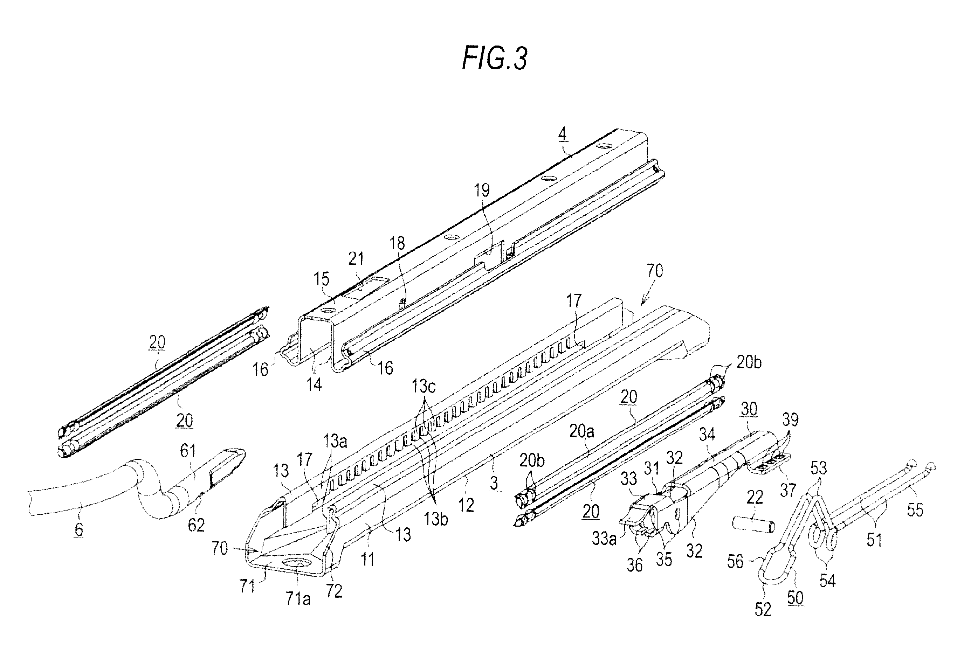

The distal end portions of the respective first folded-back wall portions 13 extend downward to form flanges 13a. As illustrated in Fig. 3, intermediate portions of the respective flanges 13a in the longitudinal direction are formed with a plurality of notches 13b formed upward from distal ends (lower ends) thereof at predetermined intervals in the direction concerned, and locked portions 13c of square tooth shape are formed between the respective adjacent notches 13b. Therefore, the plurality of locked portions 13c are arranged in a line in the longitudinal direction of each of the lower rails 3 at the predetermined intervals.

Constraining portions 17 extending in a step-shape further downward from distal ends (lower ends) of the respective flanges 13a are formed at both end portions in the longitudinal direction. It is needless to say that all of the plurality of locked portions 13c are arranged so as to be sandwiched between the both constraining portions 17 in the longitudinal direction of the lower rail 3 (the flanges 13a).

In contrast, the upper rail 4 is formed of a metal plate and, as illustrated in Fig. 2, includes a pair of second side wall portions 14 extending in the vertical direction between the both first folded-back wall portions 13 of the lower rail 3 and a second coupling wall portion 15 coupling proximal ends (upper ends) apart from the lower rail 3 of the second side wall portions 14. Then, second folded-back wall portions 16 which are formed to protrude outward in terms of the widthwise direction and then folded so as to be surrounded by the first side wall portions 11 and the first folded-back wall portions 13 are formed continuously from distal ends (lower ends) of the respective second side wall portions 14.

In other words, the lower rail 3 and the upper rail 4 each include a U-shaped rail cross section with opening sides butted against to each other, and are held so as not to be disconnected from each other in the vertical direction mainly by the engagement of the first and second folded-back wall portions 13 and 16.

As illustrated in Fig. 3, the both second side wall portions 14 of the upper rail 4 are formed with bearing holes 18 at front end portions thereof. Also, the both second side wall portions 14 of the upper rail 4 are formed with fan-shaped locked portion insertion openings 19 about the bearing holes 18 on the rear side of the bearing holes 18. Furthermore, the second coupling wall portion 15 of the upper rail 4 is formed with a square supporting hole 21 at a position forward of the bearing holes 18.

As illustrated in Fig. 2, rolling members 20 are mounted respectively between lower ends of the respective second folded-back wall portions 16 and lower ends of the first side wall portions 11 opposing thereto, and between upper ends of the respective second folded-back wall portions 16 and upper ends of the first side wall portions 11 opposing thereto, respectively. As illustrated in Fig. 3, the respective rolling members 20 each include a resin-made holder 20a extending in the fore-and-aft direction (longitudinal direction of the rail) and balls 20b mounted on the holder 20a. The balls 20b mounted on each of the holders 20a are four balls including a pair arranged on a front end portion of the holder 20a and a pair arranged on a rear end portion. The upper rail 4 is supported so as to be slidable in the longitudinal direction (the fore-and-aft direction) with respect to the lower rail 3 in a state of rolling the balls 20b of the each of the rolling members 20 with respect to the lower rail 3.

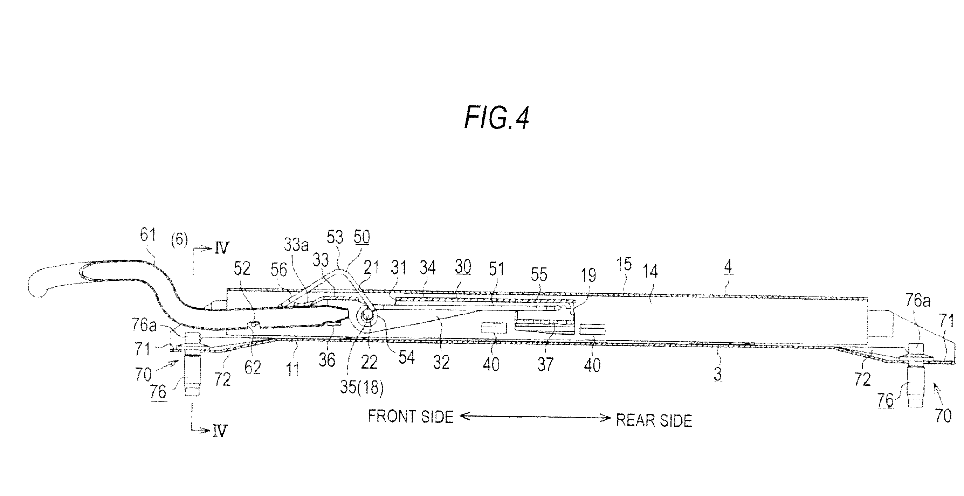

As illustrated in Fig. 4, a pair of locking members 40 formed of metallic plates are fixed to an intermediate portion of the upper rail 4 in the longitudinal direction at a distance in the direction concerned so as to sandwich the locked portion insertion openings 19. The locking members 40 are held in a mode of being bridged in the width direction between the second side wall portions 14 and the second folded-back wall portions 16 adjacent to each other in the width direction. The locking members 40 are arranged so as to move below the flanges 13a (the locked portions 13c) and move between the constraining portions 17 in the direction of relative movement of the lower rail 3 and the upper rail 4. Therefore, when the lower rail 3 and the upper rail 4 perform the movement, the movement is locked by the abutment between the constraining portions 17 and the locking members 40. Accordingly, the amount of the relative movement the lower rail 3 and the upper rail 4 is limited within a certain range.

In the upper rail 4, a lock member 30 formed of a plate member is rotatably coupled by a column-shaped supporting pin 22 having an axial line extending in the width direction. In other words, the lock member 30 extends in the fore-and-aft direction and includes a pair of vertical wall portions 32 arranged in parallel in the width direction over the substantially entire length of the longitudinal direction thereof so as to extend upright. The distance between the both vertical wall portions 32 in the width direction is set to be smaller than the distance between the both second side wall portions 14 of the upper rail 4 in the width direction. As illustrated in Fig. 3, the both vertical wall portions 32 are connected at upper end edges thereof by a top plate portion 33 at front end portions thereof in the width direction and are connected at the upper end edges thereof by a top plate portion 34 at a portion rearward of the top plate portion 33 in the width direction. The lock member 30 is formed with a square spring insertion hole 31 between the both top plate portions 33 and 34.

The top plate portion 33 includes a holding wall 33a extending forward from a front end of the vertical wall portions 32. As illustrated in Fig. 4, the holding wall 33a has an arcuate shape projecting downward in the side view. Intermediate portions of the both vertical wall portions 32 in the longitudinal direction are formed respectively with circular shaft mounting holes 35 concentric with the supporting pin 22 (the bearing holes 18). The lock member 30 is rotatably coupled to the upper rail 4 by the supporting pin 22 axially supported at both end portions thereof by the both bearing holes 18 being fitted into the both shaft mounting holes 35.

The lock member 30 includes a pair of flanged supporting walls 36 opposing each other and projecting from lower end edges of the both vertical wall portions 32 inward in the width direction respectively at a position of the top plate portion 33 in the fore-and-aft direction as illustrated in Fig. 3. The lock member 30 includes a pair of flanged locking portions 37 being apart from each other from lower end edges of rear end portions of the both vertical wall portions 32 projecting respectively outward in the width direction. The locking portions 37 are inserted into the locked portion insertion openings 19 of the both second side wall portions 14 respectively. Then, the respective locking portions 37 are formed with a plurality of (three) square locking holes 39 arranged in a line in the fore-and-aft direction at the predetermined intervals. The respective locking holes 39 are opened in the vertical direction so as to face the flanges 13a of the first folded-back portions 13 and are arranged at positions which can match the plurality of (three) locked portions 13c adjacent thereto in the longitudinal direction of the lower rail 3.

Then, the corresponding locked portions 13c are allowed to be fitted into the respective locking holes 39 when the lock member 30 rotates around the bearing holes 18 so that the both locking portions 37 rise. When the locked portions 13c are fitted into the respective locking holes 39, the relative movement between the lower rail 3 and the upper rail 4 is locked. In contrast, the respective locking holes 39 are set to come apart from the corresponding locked portions 13c when the lock member 30 rotates around the bearing holes 18 so that the both locking portions 37 move downward. At this time, the locking of the relative movement of the lower rail 3 and the upper rail 4 is released.

A wire spring 50 formed of a single wire material is arranged in the upper rail 4 as illustrated in Fig. 4. As illustrated in Fig. 3, the wire spring 50 is formed into a substantially angular U-shape opening rearward in plan view, is laterally symmetrical, and includes a pair of extending portions 51 extending in the fore-and-aft direction and includes an arcuate shaped connecting portion 52 connecting front ends of the both extending portions 51 in the width direction. The respective extending portions 51 include fixed portions 53 protruding upward at intermediate portions in the longitudinal direction, and coil portions 54 wound rearward clockwise at rear sides of the fixed portions 53. Then, the wire spring 50 is formed with first urging portions 55 at portions rearward of the fixed portions 53 of the both extending portions 51 including the coil portions 54 and is formed with a second urging portion 56 at a portion on the front side of the fixed portions 53 of the connecting portion 52 and the both extending portions 51.

As illustrated in Fig. 4, the wire spring 50 is arranged in the lock member 30 in a mode in which the both fixed portions 53 project from the spring insertion hole 31 of the lock member 30 and the supporting hole 21 of the upper rail 4, and is supported by the upper rail 4 (the both second side wall portions 14) by the coil portion 54 being wound around the supporting pin 22. The both fixed portions 53 of the wire spring 50 are in contact with rear end surfaces of the supporting hole 21 and rear end portions of the first urging portions 55 thereof are in resilient contact with a lower surface of the top plate portion 34 rearward of the coil portion 54 (supporting pin 22). In other words, the first urging portion 55 including the coil portion 54 is bent and deformed about fixed positions as a supporting point with respect to the upper rail 4 (the fixed portions 53) and urges the lock member 30 about the fixed position as the supporting point. Therefore, the lock member 30 is urged to rotate toward the side where the locking portion 37 is moved upward by the wire spring 50 (the first urging portion 55), that is, the side where the corresponding locked portions 13c are fitted to the respective locking holes 39.

The both fixed portions 53 of the wire spring 50 are kept away from contact with a front end surface of the supporting hole 21, The connecting portion 52 of the wire spring 50 (then second urging portion 56) is arranged on the front side of the holding wall 33a.

As illustrated in Fig. 3, the releasing handle 6 is formed so as to bend a tubular member, and is formed so as to bridge the both upper rails 4 in the width direction on the front side of the both upper rails 4. A distal end portion 61 extending rearward of the releasing handle 6 assumes a cylindrical shape having a smaller outer diameter than the distance between the both vertical wall portions 32 in the width direction, and a slit-shaped supporting groove 62 extending in the width direction is formed on a lower portion thereof.

Each of the distal end portions 61 of the releasing handle 6 is inserted between the both vertical wall portions 32 on the lower side of the holding wall 33a of the corresponding lock member 30 and the upper side of the both supporting walls 36 as illustrated in Fig. 4. Then, the distal end portion 61 is locked and retained by the connecting portion 52 of the wire spring 50 (the second urging portion 56) fitted into the supporting groove 62.

The distal end portion 61 inserted between the both vertical wall portions 32 is urged so as to move upward by the wire spring 50 (the second urging portion 56) in the supporting groove 62, and is held so as to rotate integrally with the lock member 30 substantially around the bearing holes 18 in a mode in which an upper portion and the lower portion of the distal end portion 61 are in abutment with a lower surface of the holding wall 33a and an upper surface of the both supporting walls 36.

Here, an operation of the embodiments disclosed here will be described.

First of all, it is assumed that an operating force of the releasing handle 6 is released. At this time, by an urging force of the wire spring 50 (the first urging portion 55), the relative movement between the lower rail 3 and the upper rail 4 in the mode described above is locked by the rotation of the lock member 30 in the direction in which the locking portions 37 rise about the supporting pin 22, that is, in the direction in which the respective locking holes 39 are fitted to the corresponding locked portions 13c integrally with the distal end portion 61 (the releasing handle 6). Then, the position of the seat 5 supported by the upper rail 4 in the fore-and-aft direction is maintained.

It is assumed that the releasing handle 6 is operated so that the front end thereof is lifted upward. At this time, against the urging force of the wire spring 50 (the first urging portion 55), locking of the relative movement between the lower rail 3 and the upper rail 4 in the mode described above is released by the rotation of the lock member 30 in the direction in which the locking portions 37 move downward about the supporting pin 22, that is, in the direction in which the respective locking holes 39 come apart from the corresponding locked portions 13c integrally with the distal end portion 61 (the releasing handle 6). Then, positional adjustment of the seat 5 supported by the upper rail 4 in the fore-and-aft direction is enabled.

Subsequently, a fixing structure of the lower rail 3 with respect to the vehicle floor 2 will be described.

As illustrated in Fig. 4, base portions 70 project respectively at the front end and the rear end of the lower rail 3 in the direction in which the lower rail 3 (the first side wall portions 1 extends upright. Each of of the base portions 70 includes a flat-shaped bearing surface 71 shifted in the direction away from the upper rail 4 in the direction of upright extension with respect to the first coupling wall portion 12. The bearing surfaces 71 are each configured to support head portions 76a of tightening bolts 76 as tightening members.

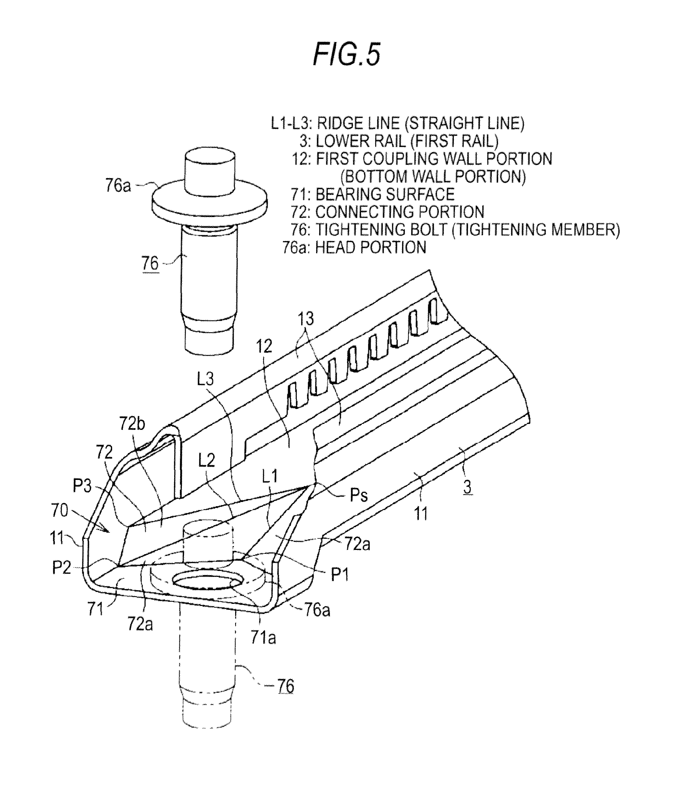

More specifically, as illustrated in Fig. 5, each of the bearing surfaces 71 has a pentagon shape extending substantially parallel to the first coupling wall portion 12. In other words, the bearing surface 71 has a shape obtained by combining a rectangular shape having a side of the same length as the width of the first coupling wall portion 12 and an isosceles triangle having a bottom side of the same length, and an apex P1 of the isosceles triangle is positioned on the non-end portion side (the intermediate portion side in the longitudinal direction) of the lower rail 3. Then, a circular bolt insertion hole 71 a penetrating in the height direction (the direction of upright extension of the lower rail 3) is formed at a center portion of the bearing surfaces 71. The lower rail 3 is tightened to the vehicle floor 2 by tightening the tightening bolt 76 inserted through the bolt insertion hole 71 a into a screw hole (not illustrated) formed on the vehicle floor 2 in a state in which the head portion 76a is placed on the bearing surfaces 71.

The bearing surface 71 arranged so as to be shifted in the direction of upright extension with respect to the first coupling wall portion 12 is connected to the first coupling wall portions 12 via a connecting portion 72 on the non-end portion side of the lower rail 3. The connecting portion 72 has a pair of triangle surfaces 72a defined by segments connecting points P2 at distal ends of the bearing surface 71 in the width direction and the apex P1 (that is, oblique sides of the isosceles triangles of the bearing surface 71), a segment connecting an origin Ps arranged on the first coupling wall portion 12 on the non-end portion side of the lower rail 3 with respect to the apex P1 and the apex P1, and segments connecting the origin Ps and the points P2. The connecting portion 72 has a pair of triangle surfaces 72b defined by segments connecting points P3 arranged on the distal ends in the width direction on the side of the end portion of the lower rail 3 with respect to the origin Ps on the first coupling wall portions 12 and the origin Ps, segments connecting the points P2 and the origin Ps, and segments connecting the points P2 and the points P3. In other words, the connecting portion 72 includes a straight line group including a ridge line L1 as a straight line connecting the origin Ps and the apex P1, ridge lines L2 as a pair of straight lines connecting the origin pus and the distal end points P2, and ridge lines L3 as a pair of straight lines connecting the origin Ps and the both points P3, that is, the straight line group extending radially so as to intersect at the origin Ps (one point). The connecting portion 72, basically having respective sides (ridge lines L1 to L3 and the like) of the triangle surfaces 72a and 72b formed by bent portions, connect the bearing surface 71 shifted in the direction of upright extension with respect to the first coupling wall portion 12. The distal end of the lower rail 3 is cut obliquely so that the both first side wall portions 11 are positioned on the non-end portion side and go upward from said end portion.

The formation of the connecting portion 72 in this is for forming the bearing surface 71 having a level difference with respect to the first coupling wall portion 12 while maintaining the cross-sectional shape of the lower rail 3 at a high degree of accuracy.

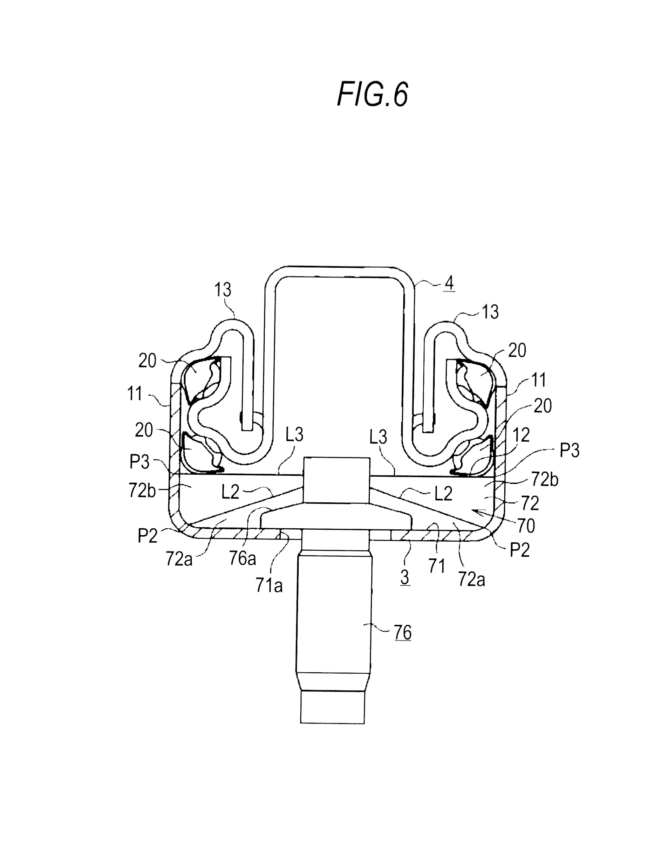

As illustrated in Fig. 6, the connecting portion 72 (the base portion 70) is arranged on an extension of the pair of rolling members 20 on the lower side in the direction of relative movement. In the embodiment disclosed here, the amplitude of relative movement between the lower rail 3 and the upper rail 4 is limited by the locking members 40 or the like so that the rolling members 20 do not make entry into the base portion 70. In other words, at the time of the relative movement between the lower rail 3 and the upper rail 4, a portion of the lower rail 3 where the upper rail 4 can slide is set to remain on the non-end portion side of the lower rail 3 with respect to the connecting portion 72.

Subsequently, a method of manufacturing the lower rail 3 will be described. In the following description, description will be given with a structure of a simplified lower rail 3 in which the locked portions 13c and the constraining portions 17 are eliminated for the sake of convenience.

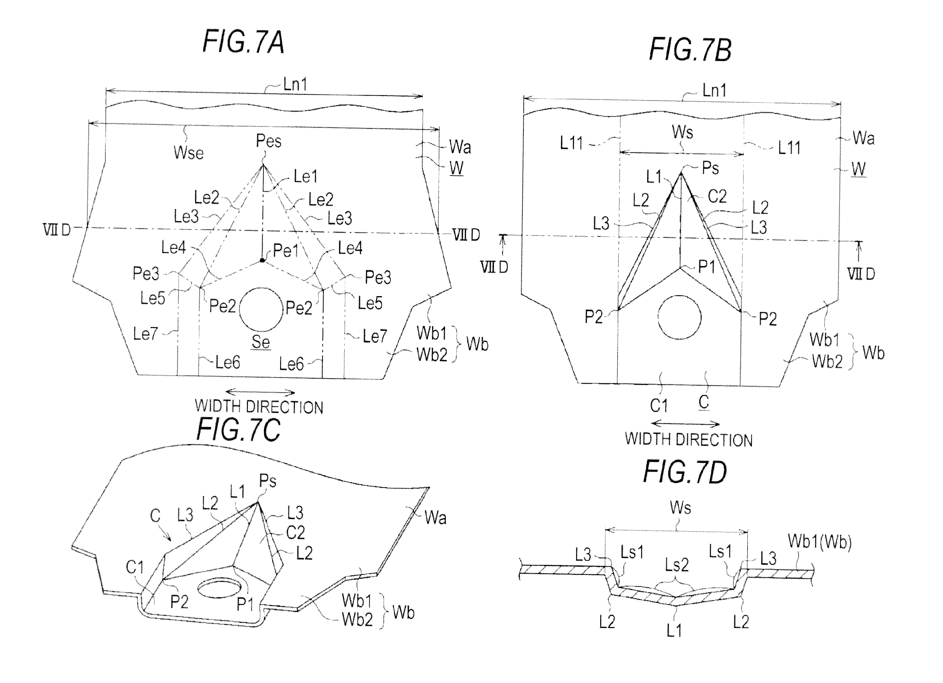

As illustrated in Fig. 7A, a material W of the lower rail 3 is formed of a metallic flat plate, and has a rectangular body portion Wa over the substantially entire length in the longitudinal direction except for the distal end. A length Ln1 of the body portion Wa in the width direction substantially matches a length which is a sum of all the lengths of the both first side wall portions 11, the first coupling wall portion 12, and the both first folded-back wall portions 13 on the rail cross-section of the lower rail 3. The material W includes a base processing portion Wb at a distal end continuing the body portion Wa. The base processing portion Wb includes a first processing portion Wb1 formed so that both end portions in the width direction protrude in a triangle shape with respect to the body portion Wa, and includes an isosceles trapezoidal shaped second processing portion Wb2 continuing a narrowed distal end of the first processing portion Wb1.

The base processing portion Wb is a portion configured to form the bearing surface 71 and the connecting portion 72 of the lower rail 3 and polygonal lines which correspond to the bent portions at the time of forming are also illustrated by chain double-dashed lines in Fig. 7A. In other words, a polygonal line Le1 extending from a origin Pes (corresponding to the origin Ps) at the center of a boundary position between the body portion Wa and the base processing portion Wb in the width direction toward a distal end side extending in the longitudinal direction, a pair of polygonal lines Le2 extending from the origin Pes toward the distal end sides in lateral symmetry, and a pair of polygonal lines Le3 extending on the outsides of the both polygonal lines Le2 in the width direction toward the distal end sides also in lateral symmetry are set. Also, a pair of polygonal lines Le4 connecting an end point Pe1 of the polygonal line Le1 and end points Pe2 of the both polygonal lines Le2, and a pair of polygonal lines Le5 connecting the end points Pe2 and end points Fe3 of the polygonal lines Le3 are set. Furthermore, a pair of polygonal lines Le6 extending to the distal end from the end points Pe2 in the longitudinal direction, and a pair of polygonal lines Le7 extending from the end points Pe3 to the distal ends in the longitudinal direction are set. Only the both polygonal lines Le3 and the both polygonal lines Le7 are mountain folded lines and others are valley folded lines. The both polygonal lines Le4 and the both polygonal lines Le6 define a pentagon shaped surface Se (corresponding to the bearing surface 71) together with the distal end of the material W.

Then, when the material W is bent along the polygonal lines Le1 to Le7 by the press forming, the base processing portion Wb is formed with a depression C shifted from the body portion Wa in the direction of the thickness (corresponding to the direction of upright extension) as illustrated in Figs. 7B and 7C. The depression C corresponds to the base portion 70, and the outside thereof extends so as to be flush with the body portion Wa. Therefore, the depression C has a pentagonal shaped bearing surface C1 (corresponding to the bearing surface 71) and includes a connecting portion C2 connecting the bearing surface C1 and the body portion Wa on the non-end portion side of the material W.

The first processing portion Wb1 of the base processing portion Wb has a rectangular shape continuing the body portion Wa in plan view and the length thereof in the width direction matches the length Ln1. In other words, the length obtained by subtracting the distance between the edges of the width direction (distance in the width direction) of the connecting portion C2 from the curve length of a cross-sectional shape in the width direction (curve length in the width direction) of the connecting portion C2 (the connecting portion 72) is set to be equivalent to a projecting length in a deployed state (that is, the first processing portion Wb1 in Fig. 7A) from the body portion Wa in the width direction.

Specifically, as illustrated in cross section taken along a given line VIID-VIID traversing the connecting portion C2 in the width direction in Fig. 7D, a curve length Ls of the cross-sectional shape of the connecting portion C2 (the connecting portion 72) in the width direction is expressed by the expression given below with lengths Ls1 and Ls2 of the cross-sectional shape of the respective triangular surfaces which constitute the connecting portion C2.

$$Ls=(Ls1+Ls2)\times2$$

Therefore, when the distance of the connecting portion C2 along the VIID-VIID line in the width direction is expressed by a distance Ws, a length ∆L1 obtained by subtracting the distance Ws from the curve length Ls is expressed by the following expression. ∆L1=Ls-Ws= (Ls1+Ls2)×2-Ws

In contrast, in Fig. 7A, when the distance of the base processing portion Wb in the width direction along the line VIID-VIID is expressed by a distance Wse, a projecting length ∆L2 of the base processing portion Wb from the body portion Wa in the width direction is expressed by the following expression.

$$\Delta L2=Wse-Ln1$$

Then, by setting the length ∆L1 and the projecting length ∆L2 to be equal (∆L1=∆L2), the material W having an appearance of a band shape is obtained while restraining variations in thickness (translation of the material) affecting the connecting portion C2 or a peripheral edge portion thereof after the connecting portion C2 or the like is formed on the material W.

Subsequently, when the material W is bent along a pair of polygonal lines L11 extending in the longitudinal direction including both ends of the depression C in the width direction through press forming, the both sides are bent upright with respect to the center portion of the material W in the width direction and, finally, the first coupling wall portion 12 and the pair of first side wall portions 11 or the like extending upright from both end edges of the first coupling wall portion 12 are formed as illustrated in Fig. 5. At this time, the bearing surface C1 and the connecting portion C2 of the depression C become the bearing surface 71 and the connecting portion 72 respectively, and hence form the base portion 70.

Subsequently, an action at the time of manufacture of the lower rail 3 will be described.

As already described, the plurality of the ridge lines L1 to L3 (the straight line group) of the connecting portion 72 extend radially so as to intersect at a point (the origin Ps) positioned on the non-end portion side of the lower rail 3 with respect to the bearing surface 71. Therefore, even though the bearing surface 71 is shifted with respect to the first coupling wall portion 12 in the direction of the upright extension, so called bending forming which causes deformation at a constant ratio in the vicinity of the respective ridge lines L1 to L3 is dominant as the forming of the connecting portion 72. Therefore, for example, deformation of the material W of the lower rail 3 in a wide range and indeterminately is restrained in comparison with the case where general squeeze forming is performed and the cross-sectional shape of the lower rail 3 is formed to be constant in the longitudinal direction except for the distal end with higher degree of accuracy.

Also, design flexibility of the bearing surface 71 is improved irrespective of the shift length in the direction of upright extension of the bearing surface 71 with respect to the first coupling wall portion 12, the deformation of the material W of the lower rail 3 in the wide range and indeterminately is restrained.

In addition, after the formation of the connecting portion C2 or the like on the material W of the lower rail 3, the projection of the material W (the first processing portion Wb1) in the width direction is eliminated. Therefore, by bending the material W having an appearance of a band shape after forming the connecting portion C2 or the like, the cross-sectional shape of the lower rail 3 can be formed easily and correctly.

As described above in detail, the following advantages are achieved according to the first embodiment.

(1) According to the first embodiment, the deformation of the material W of the lower rail 3 in the wide range and indeterminately is restrained in comparison with the case where general squeeze forming is performed and the cross-sectional shape of the lower rail 3 is formed to be constant in the longitudinal direction except for the distal end with higher degree of accuracy. Also, since deformation of the material W of the lower rail 3 in the wide range and indeterminately is restrained (since the constraint of the limitation of tension of the material of the lower rail 3 may be alleviated) irrespective of the shift length in the direction of upright extension of the bearing surface 71 with respect to the first coupling wall portion 12, the design flexibility of the bearing surface 71 is improved.

(2) According to the first embodiment, at the time of the relative movement between the lower rail 3 and the upper rail 4 (the rolling member 20), the portion of the lower rail 3 where the upper rail 4 can slide is set to remain on the non-end portion side of the lower rail 3 with respect to the connecting portion 72 by the locking members 40 or the like. Accordingly, since the upper rail 4 does not slide on the connecting portion 72, the action of the relative movement (sliding movement) is prevented from being impaired by the connecting portion 72.

(3) According to the first embodiment, since the connecting portion 72 has the triangle surfaces 72a and 72b, peripheral components may be mounted by using the triangle surfaces (plane surfaces) 72a and 72b, so that convenience is improved.

(4) According to the first embodiment, the length ∆L1 obtained by subtracting the distance Ws of the connecting portion C2 in the width direction from the curve length Ls of the cross sectional shape of the connecting portion C2 (the connecting portion 72) in the width direction is set to be equal to the projecting length ∆L2 of the connecting portion C2 in the width direction in the deployed state. Therefore, after the formation of the connecting portion C2 or the like on the material W of the lower rail 3, the projection of the material W in the width direction is eliminated. Therefore, by bending the material W having an appearance of a band shape after forming the connecting portion C2 or the like, the cross-sectional shape of the lower rail 3 can be formed easily and correctly.

(Second Embodiment)

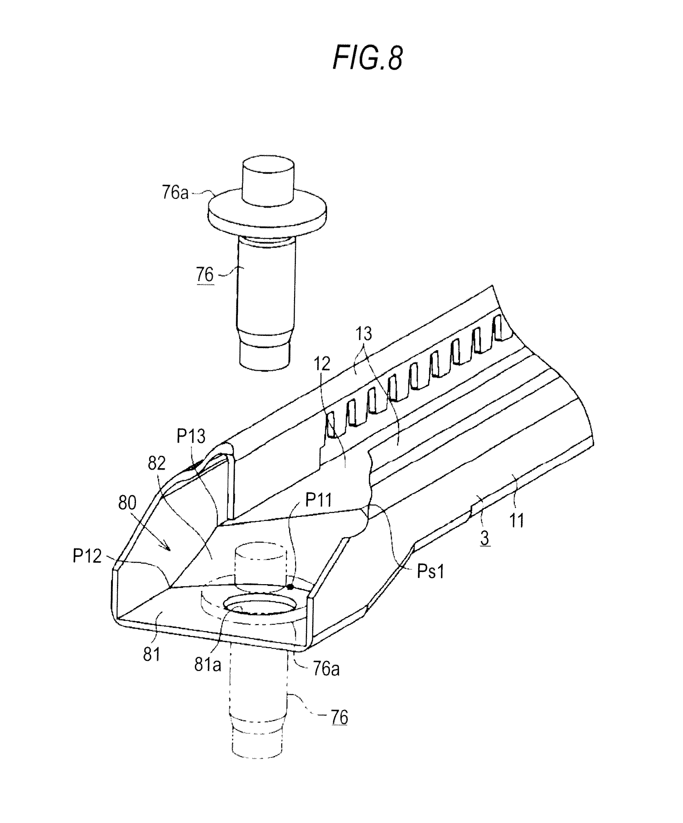

Referring now to Fig. 8 to Fig. 10, a second embodiment disclosed here will be described. The second embodiment has a configuration in which only the structure of the base portion of the first embodiment is changed, and hence the detailed description of common features is omitted.

As illustrated in Fig. 8, base portions 80 project at the front end (and the rear end) of the lower rail 3 of the second embodiment in the direction in which the lower rail 3 (the first side wall portions 11) extends upright. Each of the base portions 80 includes a flat-shaped bearing surface 81 shifted in the direction away from the upper rail 4 in the direction of upright extension with respect to the first coupling wall portion 12. The bearing surface 81 assumes substantially a semi-oval shape extending substantially parallel to the first coupling wall portion 12. In other words, the bearing surface 81 has a shape obtained by combining a rectangular shape having a side af the same length as the width of the first coupling wall portion 12 and a circular segment having the chord of the same length, and an apex P11 of the circular segment is positioned on the non-end portion side (the intermediate portion side in the longitudinal direction) of the lower rail 3. Then, a circular bolt insertion hole 81a penetrating in the height direction (the direction of upright extension of the lower rail 3) is formed at a center portion of the bearing surface 81. The lower rail 3 is tightened to the vehicle floor 2 by tightening the tightening bolt 76 inserted through the bolt insertion hole 81a into a screw hole (not illustrated) formed on the vehicle floor 2 in a state in which the head portion 76a of the tightening bolt 76 is placed on the bearing surface 81.

The bearing surface 81 arranged so as to be shifted in the direction of upright extension with respect to the first coupling wall portion 12 is connected to the first coupling wall portion 12 via a connecting portion 82 on the non-end portion side of the lower rail 3. The connecting portion 82 has a conical shape projecting downward (the direction of the upright extension on the side where the base surface 81 is shifted with respect to the first coupling wall portion 12) with an origin Ps1 arranged on the first coupling wall portion 12 on the non-end portion side of the lower rail 3 with respect to the apex P11 as an apex, and is defined by a curved line including a pair of points P12 at both ends of the base surface 81 in the width direction and the apex P11 (that is, the distal end of the base surface 81 on the non-end portion side), a pair of segments connecting points P13 arranged at the distal ends in the width direction of the lower rail 3 on the end portion side with respect to the origin Ps1 on the first coupling wall portion 12 and the origin Ps1, and a pair of segments connecting the point P12 and the point P13.

In other words, the connecting portion 82 has a straight line group including an infinite number of bus lines extending from the origin Ps1, in other words, a straight line group extending radially so as to intersect at the origin Ps1 (one point). The connecting portion 82, basically curved at the partitioned position described above as the bent portion, connect the bearing surface 81 shifted in the direction of upright extension with respect to the first coupling wall portion 12.

The formation of the connecting portion 82 in this manner is for forming the bearing surface 81 having a level difference with respect to the first coupling wall portion 12 while maintaining the cross-sectional shape of the lower rail 3 at high degree of accuracy.

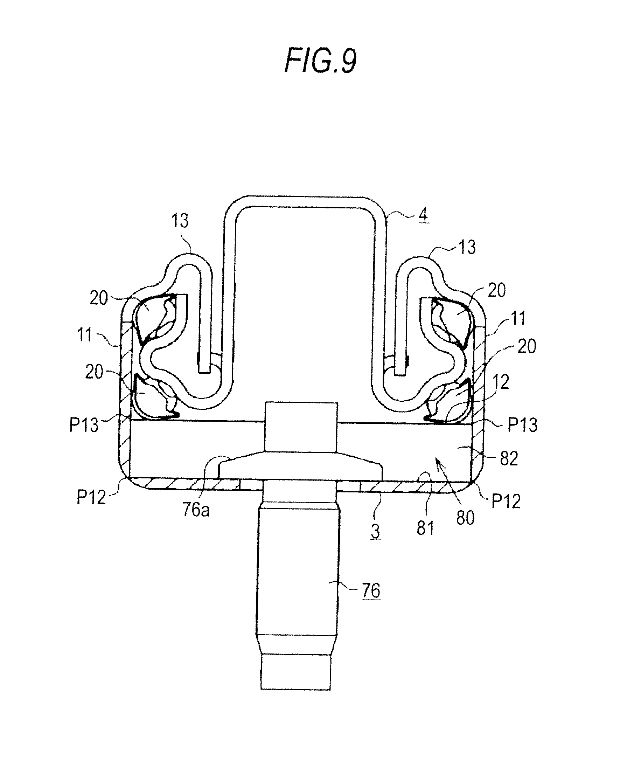

As illustrated in Fig. 9, the connecting portion 82 (the base portion 80) is arranged on an extension of the pair of rolling members 20 on the lower side in the direction of relative movement. In the second embodiment as well, the amplitude of relative movement between the lower rail 3 and the upper rail 4 is limited by the locking members 40 or the like so that the rolling members 20 do not make entry into the base portion 80. In other words, at the time of the relative movement between the lower rail 3 and the upper rail 4, the portion of the lower rail 3 where the upper rail 4 can slide is set to remain on the non-end portion side of the lower rail 3 with respect to the connecting portion 82.

Subsequently, a method of manufacturing the lower rail 3 will be described. In the second embodiment as well, description will be given with a structure of a simplified lower rail 3 in which the locked portions 13c and the constraining portions 17 are eliminated for the sake of convenience.

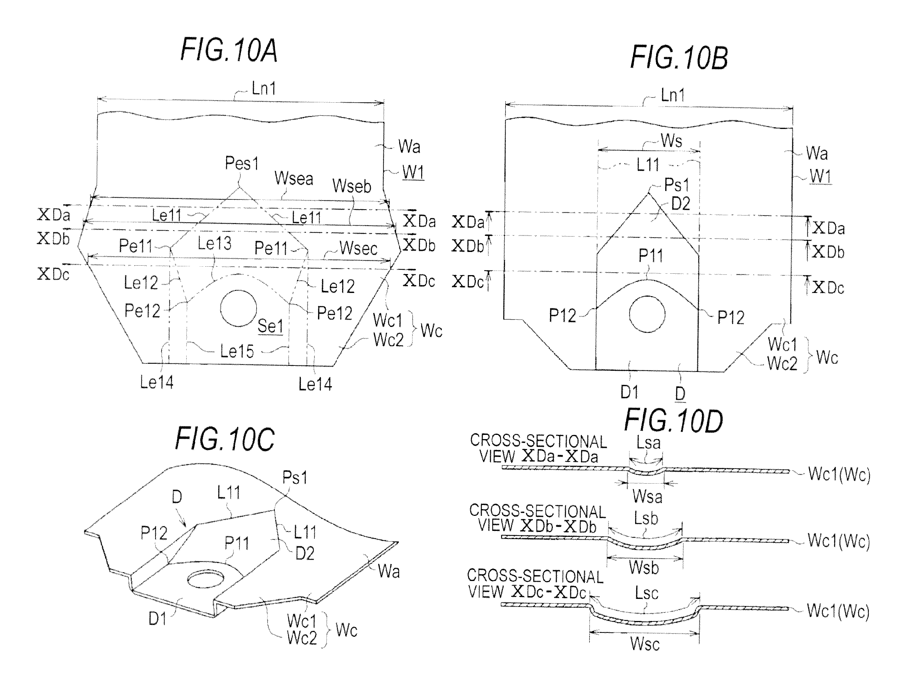

As illustrated in Fig. 10A, a material W1 of the lower rail 3 is formed of a metallic flat plate, and has the body portion Wa over the substantially entire length in the longitudinal direction except for the distal end. The material W1 includes a base processing portion Wc at a distal end continuing the body portion Wa. The base processing portion Wc includes a first processing portion Wc1 formed so that both end portions in the width direction protrude in a triangle shape with respect to the body portion Wa, and includes an isosceles trapezoidal shaped second processing portion Wc2 continuing a narrowed distal end of the first processing portion Wc1. Boundary portions between the first and second processing portions Wc1, Wc2 are connected linearly, and distal end portion of the base processing portion Wc form a single isosceles trapezoidal shape as a whole.

The base processing portion Wc is a portion configured to form the bearing surface 81 and the connecting portion 82 of the lower rail 3 and polygonal lines which correspond to the bent portions at the time of forming are also illustrated by chain double-dashed lines in Fig. 10A. In other words, a pair of polygonal lines Le11 extending in lateral symmetry from an origin Pes1 (corresponding to the origin Ps1) at the center of the boundary position between the body portion Wa and the base processing portion Wc in the width direction toward the distal end sides, a pair of polygonal lines Le12 extending from end points Pe11 of the both polygonal lines Lel1 toward the distal end sides in lateral symmetry, and an arch shaped polygonal line Le13 connecting end points Pe12 of the both polygonal lines Le12 in the width direction are set. Also, a pair of polygonal lines Le14 extending to the distal end from the end points Pe11 in the longitudinal direction, and a pair of polygonal lines Le15 extending from the end points Pe12 to the distal ends in the longitudinal direction are set. Only the both polygonal lines Le11 and the both polygonal lines Le14 are mountain folded lines and others are valley folded lines. The polygonal line Le13 and the both polygonal lines Le15 define a substantially semi-oval shaped surface Se1 (corresponding to the bearing surface 81) together with the distal end of the material W1.

Then, when the material W1 is bent along the polygonal lines Le11 to Le15 by the press forming, the base processing portion Wc is formed with a depression D shifted from the body portion Wa in the direction of the thickness (corresponding to the direction of upright extension) as illustrated in Figs. 10B and 10C. The depression D corresponds to the base portion 80, and the outside thereof extends so as to be flush with the body portion Wa. Therefore, the depression D has a substantially semi-oval shaped bearing surface D1 (corresponding to the bearing surface 81) and includes a connecting portion D2 connecting the bearing surface D1, the body portion Wa and the like on the non-end portion side of the material W1.

The first processing portion Wc1 of the base processing portion Wc has a rectangular shape continuing the body portion Wa in plan view and the length thereof in the width direction matches the length Ln1. In other words, the length obtained by subtracting the distance between the edges in the width direction of the connecting portion D2 from the curve length of a cross-sectional shape in the width direction of the connecting portion D2 (the connecting portion 82) is set to be equivalent to a projecting length of the connecting portion D2 in a deployed state (that is, the first processing portion Wc1 in Fig. 10A) from the body portion Wa in the width direction.

Specifically, as illustrated in cross section taken along a given line XDa-XDa, a line XDb-XDb, and a line XDc-XDc different from each other traversing the connecting portion D2 in the width direction in Fig. 10D, lengths $\Delta$L1a, $\Delta$L1b, $\Delta$L1c obtained by subtracting distances Wsa, Wsb, Wsc of the connecting portion D2 in the width direction along the corresponding line from curve lengths Lsa, Lsb, Lsc of the cross-sectional shape in the width direction of the connecting portion D2 (the connecting portion 82) are expressed by the following expressions respectively.

$\Delta$ L1a=Lsa-Wsa

$\Delta$ L1b=Lsb-Wsb

$\Delta$ L1c=Lsc-Wsc

It is needless to say that the respective cross-sectional shapes of the connecting portion D2 including a conical surface projecting downward have an arcuate shape projecting downward.

In contrast, in Fig. 10A, when the distances of the base processing portion Wc in the width direction along the lines XDa-XDa, XDb-XDb, and XDc-XDc are expressed by distances Wsea, Wseb, and Wsec respectively, projecting lengths $\Delta$L2a, $\Delta$L2b, and $\Delta$L2c of the base processing portion Wc from the body portion Wa in the width direction are expressed by the following expressions respectively.

$\Delta$ L2a=Wsea-Ln1

$\Delta$ L2b=Wseb-Ln1

$\Delta$ L2c=Wsec-Ln1

Then, by setting the lengths $\Delta$L1a, $\Delta$L1 b, $\Delta$L1c and the projecting lengths $\Delta$L2a, $\Delta$L2b, $\Delta$L2c to be respectively equal, the material W1 having an appearance of a band shape is obtained while restraining variations in thickness (the translation of the material) affecting the connecting portion D2 or a peripheral edge portion thereof after the connecting portion D2 or the like is formed on the material W1.

Subsequently, when the material W1 is bent along the pair of polygonal lines L11 extending in the longitudinal direction including both ends of the depression D in the width direction through press forming, the both sides of the material W1 are bent upright with respect to the center portion in the width direction and, finally, the first coupling wall portion 12 and the pair of first side wall portions 11 or the like extending upright from both end edges of the first coupling wall portion 12 as illustrated in Fig. 8 are formed. At this time, the bearing surface D1 and the connecting portion D2 of the depression D become the bearing surface 81 and the connecting portion 82 respectively, and hence form the base portion 80.

Subsequently, an operation at the time of manufacture of the lower rail 3 will be described.

As already described, an infinite number of bus lines (the straight line group) of the curved connecting portion 82 extend radially so as to intersect at a point (the origin Ps1) positioned on the non-end portion side of the lower rail 3 with respect to the bearing surface 81. Therefore, even though the bearing surface 81 is shifted with respect to the first coupling wall portion 12 in the direction of the upright extension, so called bending forming which causes deformation at a constant ratio in the vicinity of the respective bus lines is dominant as the forming of the connecting portion 82. In particular, since the connecting portion 82 has an infinite number of bus lines, deformation is gentle as a whole. Therefore, for example, deformation of the material W1 of the lower rail 3 in a wide range and indeterminately is restrained in comparison with the case where general squeeze forming is performed and the cross-sectional shape of the lower rail 3 is formed to be constant in the longitudinal direction except for the distal end with higher degree of accuracy.

Also, design flexibility of the bearing surface 81 is improved irrespective of the shift length in the direction of upright extension of the bearing surface 81 with respect to the first coupling wall portion 12, the deformation of the material W1 of the lower rail 3 in the wide range and indeterminately is restrained.

In addition, after the formation of the connecting portion D2 or the like on the material W1 of the lower rail 3, the projection of the material W1 (the first processing portion Wc1) in the width direction is eliminated. Therefore, by bending the material W1 having an appearance of a band shape after forming the connecting portion D2 or the like, the cross-sectional shape of the lower rail 3 can be formed easily and correctly.

As described above in detail, the following advantages are achieved according to the second embodiment in addition to the effects of (1), (2), and (4) of the first embodiment.

(1) According to the second embodiment, since the connecting portion 82 has a conical surface (curved surface) projecting in the direction of upright extension on the side where the base surface 81 is shifted with respect to the first coupling wall portion 12, for example, a steep bending forming (bending forming) is unnecessary and the workability is improved correspondingly.

The embodiments disclosed here may be modified as follows.

In the embodiments disclosed here, the lengths of the base portions 70 and 80 (the connecting portions 72 and 82) in the width direction and the length of the first coupling wall portion 12 in the width direction are set to be the same. In contrast, the lengths of the base portions 70 and 80 in the width direction may be set to be shorter than the length of the first coupling wall portion 12 in the width direction. In particular, in the direction of relative movement, the connecting portions 72 and 82 (the base portions 70 and 80) may be configured not to be arranged on the extension of the pair of rolling members 20 on the lower side, that is, the portion of the lower rail 3 on which the upper rail 4 is slidable may be set to remain within the outside of the connecting portions 72 and 82 in the width direction at the time of the relative movement between the lower rail 3 and the upper rail 4. In this case, at the time of relative movement between the lower rail 3 and the upper rail 4, since the upper rail 4 does not slide on the connecting portions 72 and 82, impairment of the action of the relative movement (sliding movement) by the connecting portions 72 and 82 may be avoided by the connecting portions 72, 82. Also, the portion of the lower rail 3 on which the upper rail 4 is slidable may be overlapped with a range of the connecting portions 72 and 82 in the longitudinal direction (in the direction of the relative movement), the constraint of the range of the relative movement of the lower rail 3 and the upper rail 4 by the connecting portions 72 and 82 is prevented.

According to the embodiments disclosed here, the length obtained by subtracting the distance between the edges of the connecting portions 72 and 82 in the width direction from the curve length of the cross sectional shapes of the connecting portions 72 and 82 (the connecting portions C2 and D2) in the width direction may be set to be different from the projecting length of the connecting portions 72 and 82 in the width direction in the deployed state.

In the embodiments disclosed here, at the time of the relative movement between the lower rail 3 and the upper rail 4, the portion of the lower rail 3 where the upper rail 4 can slide may extend beyond the connecting portions 72 and 82 (the base portions 70 and 80).

In the embodiments disclosed here, the straight line group of the connecting portions 72 and 82 intersects at a point on the first coupling wall portion 12 (the origins Ps, Ps1). However, the point of intersection may be set to a point shifted to the direction of the height with respect to the first coupling wall portion 12. In other words, the straight line group may pass through a plurality of points on the first coupling wall portion 12. In this case, segments connecting the plurality of points correspond to the bent portions of the connecting portions 72 and 82.

In the embodiments disclosed here, the bearing surfaces 71 and 81 may be shifted to a position closer to the upper rail 4 in the direction of upright extension with respect to the first coupling wall portion 12.

In the embodiments disclosed here, the bearing surfaces 71 and 81 do not necessarily extend in parallel to the first coupling wall portion 12. The bearing surfaces 71 and 81 do not necessarily have to be flat, and may be bent or curved in conformity to the head portions of the tightening member supported thereby.

In the embodiments disclosed here, the tightening member whose head portion is supported by the bearing surfaces 71 and 81 may be, for example, a self-locking pin.

In the embodiments disclosed here, the relationship of fixation between the lower rail 3 and the upper rail 4, and between the vehicle floor 2 and the seat 5 (in other words, the relationship of arrangement in the vertical direction) may be reverse. In this case, the tightening member (the tightening bolt 76) whose head portion is supported by the bearing surfaces 71 and 81 is used for the fastening with respect to the seat 5.

In the embodiments disclosed here, the lower rail 3 and the upper rail 4 (vehicle seat sliding apparatus) may be adapted to be disposed one each or three or more each for the seat 5.

In the embodiments disclosed here, the direction of movement of the seat in association with the relative movement between the lower rails and the upper rails may be, for example, the width direction thereof.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby,

**Claims**

1. A vehicle seat sliding apparatus comprising a first rail formed of a metallic plate to be fixed to either one of a vehicle floor and a seat, and a second rail fixed to the other one of the vehicle floor and the seat and coupled to the first rail so as to be capable of performing a relative movement, wherein
the first rail is formed with a bearing surface configured to support a head portion of a tightening member shifted with respect to a bottom wall portion of the first rail in the direction of upright extension of the first rail at a distal end thereof,
a connecting portion configured to connect the bearing surface and the bottom wall portion on the non-end portion side of the first rail with respect to the bearing surface is formed to have a straight line group extending radially so as to intersect at a point positioned on the non-end portion side of the first rail with respect to the bearing surface.

2. The vehicle seat sliding apparatus according to Claim 1, wherein
at the time of the relative movement between the first rail and the second rail, a portion of the first rail on which the second rail is slidable is set to remain on the non-end portion side of the rail with respect to the connecting portion.

3. The vehicle seat sliding apparatus according to Claim 1 or 2, wherein
the straight line group forms a triangle surface with adjacent straight lines.

4. The vehicle seat sliding apparatus according to any one of Claims 1 to 3,
wherein
at the time of the relative movement between the first rail and the second rail, the portion of the first rail on which the second rail is slidable is set to remain on the outside of the connecting portion in the width direction.

5. The vehicle seat sliding apparatus according to any one of Claims 1 to 4,
wherein
a length obtained by subtracting the distance between the edges of the connecting portion in the width direction from the curve length of a cross-sectional shape of the connecting portion in the width direction is set to be equal to a projection length in the width direction when the connecting portion is deployed.

6. The vehicle seat sliding apparatus according to Claim 1 or 2, wherein
the connecting portion forms a curved surface projecting in the direction of upright extension on the side where the bearing surface is shifted with respect to the bottom wall portion.

FIG.1

FORE-AND-AFT
DIRECTION
⟵⟶

EP 2 628 632 A1

FIG.2

14

*FIG.3*

EP 2 628 632 A1

## FIG.4

FRONT SIDE ⟷ REAR SIDE

# FIG.5

L1-L3: RIDGE LINE (STRAIGHT LINE)
3: LOWER RAIL (FIRST RAIL)
12: FIRST COUPLING WALL PORTION
    (BOTTOM WALL PORTION)
71: BEARING SURFACE
72: CONNECTING PORTION
76: TIGHTENING BOLT (TIGHTENING MEMBER)
76a: HEAD PORTION

# FIG.6

## FIG.7A

Ln1

Wse

Pes

Le1

Le2       Le2
Le3         Le3

VII D                        VII D

Le4        Pe1        Le4

Pe3                   Pe3
Le5      Pe2   Pe2      Le5

Le7                     Le7

Se

Le6      Le6

Wa
W

Wb1
Wb2 } Wb

WIDTH DIRECTION

## FIG.7B

Ln1

L11              Ws              L11

L1      Ps
L2         C2
L3          L2
           L3

VII D

P1

VII D

P2                    P2

Wa
W

Wb1
Wb2 } Wb

C1      C

WIDTH DIRECTION

## FIG.7C

Ps

C   L3  L2  L1        L3
                     C2
C1                   L2

P2   P1

Wa

Wb1
Wb2 } Wb

## FIG.7D

Ws

L3   Ls1        Ls1   L3        Wb1(Wb)

Ls2

L2      L1      L2

EP 2 628 632 A1

# FIG.8

## FIG.9

EP 2 628 632 A1

## FIG.10A

Ln1

Wa
W1

Pes1  Wsea  Wseb

XDa — Le11 ————— Le11 — XDa
XDb — XDb
Pe11  Le13  Pe11  Wsec
XDc — XDc

Le12  Le12
Pe12  Se1  Pe12  Wc1 } Wc
Le15  Wc2

Le14  Le14

## FIG.10B

Ln1

Ws
L11

Wa
W1

Ps1
D2

XDa  XDa
XDb  XDb
P11
XDc  XDc

P12  P12

Wc1 } Wc
Wc2

D1  D

## FIG.10C

Ps1

D  L11

P12  L11
P11  D2
Wa

D1  Wc1 } Wc
Wc2

## FIG.10D

CROSS-SECTIONAL VIEW XDa-XDa  Lsa
Wc1(Wc)
Wsa

CROSS-SECTIONAL VIEW XDb-XDb  Lsb
Wc1(Wc)
Wsb

CROSS-SECTIONAL VIEW XDc-XDc  Lsc
Wc1(Wc)
Wsc

# FIG.11

# FIG.12

Europäisches
Patentamt

European
Patent Office

Office européen
des brevets

# EUROPEAN SEARCH REPORT

Application Number

EP 13 15 5382

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/238712 A1 (OH BYEONG CHAN [KR]) 2 December 2004 (2004-12-02) * the whole document * * figure 5 * * abstract * ----- | 1-4,6 | INV. B60N2/015 |
| X | JP S62 77246 A (NISSAN MOTOR) 9 April 1987 (1987-04-09) * abstract * ----- | 1-4,6 | |
| X | US 2003/006355 A1 (HORSFIELD KEITH C [CA] ET AL) 9 January 2003 (2003-01-09) * the whole document * ----- | 1-4,6 | |
| A,D | DE 40 32 676 A1 (HAMMERSTEIN GMBH C ROB [DE]; DAIMLER BENZ AG [DE]) 16 April 1992 (1992-04-16) * the whole document * ----- | 1-6 | |
| A,D | FR 2 898 555 A1 (FAURECIA SIEGES AUTOMOBILE [FR]) 21 September 2007 (2007-09-21) * the whole document * ----- | 1-6 | TECHNICAL FIELDS SEARCHED (IPC) B60N |

The present search report has been drawn up for all claims

| Place of search | Date of completion of the search | Examiner |
|---|---|---|
| Munich | 13 May 2013 | Zevelakis, Nikolaos |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&: member of the same patent family, corresponding document

EPO FORM 1503 03.82 (P04C01)

**ANNEX TO THE EUROPEAN SEARCH REPORT
ON EUROPEAN PATENT APPLICATION NO.**

EP 13 15 5382

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2013

| Patent document cited in search report | | | Publication date | Patent family member(s) | | | Publication date |
|---|---|---|---|---|---|---|---|
| US 2004238712 | A1 | | 02-12-2004 | CN | 1572580 | A | 02-02-2005 |
| | | | | JP | 4095575 | B2 | 04-06-2008 |
| | | | | JP | 2004352229 | A | 16-12-2004 |
| | | | | KR | 20040101815 | A | 03-12-2004 |
| | | | | US | 2004238712 | A1 | 02-12-2004 |
| JP S6277246 | A | | 09-04-1987 | JP | H0526692 | B2 | 16-04-1993 |
| | | | | JP | S6277246 | A | 09-04-1987 |
| US 2003006355 | A1 | | 09-01-2003 | DE | 10228314 | A1 | 27-02-2003 |
| | | | | FR | 2827555 | A1 | 24-01-2003 |
| | | | | SE | 0201993 | A | 10-01-2003 |
| | | | | US | 2003006355 | A1 | 09-01-2003 |
| | | | | US | 2003209930 | A1 | 13-11-2003 |
| DE 4032676 | A1 | | 16-04-1992 | DE | 4032676 | A1 | 16-04-1992 |
| | | | | FR | 2668740 | A1 | 07-05-1992 |
| | | | | GB | 2249720 | A | 20-05-1992 |
| | | | | IT | 1250114 | B | 30-03-1995 |
| | | | | JP | H058670 | A | 19-01-1993 |
| | | | | JP | H0735136 | B2 | 19-04-1995 |
| | | | | US | 5215347 | A | 01-06-1993 |
| FR 2898555 | A1 | | 21-09-2007 | CN | 101400543 | A | 01-04-2009 |
| | | | | DE | 112007000693 | T5 | 28-05-2009 |
| | | | | FR | 2898555 | A1 | 21-09-2007 |
| | | | | JP | 4791553 | B2 | 12-10-2011 |
| | | | | JP | 2009530152 | A | 27-08-2009 |
| | | | | RU | 2008141127 | A | 27-04-2010 |
| | | | | US | 2009060401 | A1 | 05-03-2009 |
| | | | | WO | 2007118946 | A2 | 25-10-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7035136 B

- JP 4791553 B